# EUROPEAN PATENT APPLICATION

(11) **EP 1 429 516 A1**
(43) Date of publication of application: **16.06.2004**
(21) Application number: 02360341.8
(22) Date of filing: 09.12.2002
(51) Int. Cl.: H04L 29/06, H04M 7/00

(54) **Method and gateway for transportation of stream traffic**

(71) Applicant: ALCATEL, 75008 Paris (FR)
(72) Inventor: Rothenhöfer, Karl, Dipl.-Ing., 71229 Leonberg (DE)
(74) Representative: Zinsinger, Norbert

(57) **Abstract**

The invention concerns a method and a gateway (51, 53, 55) for transporting stream traffic over an IP network (1). A gateway receives stream data (81, 82) assigned to different stream data channels. The gateway (51, 53, 55) allocates two or more stream data channels to a stream service emulation tunnel provided by IP packets (83, 84) periodically transmitted over the IP network (1). A packetization unit (513) packs the stream data of the allocated two or more stream data channels in IP packets (83, 84) assigned to said stream service emulation tunnel. Further, it periodically sends these IP packets (83, 84) over the IP network (1), wherein such IP packets (83, 84) contain stream data of two or more different stream data channels.

## Description

The present invention relates to a gateway for transporting stream traffic over an IP network and to a method for transporting stream traffic through a gateway over an IP network.

There exist several attempts to develop effective systems for implementing voice-based communications over packet-based networks, in particular VoIP communications (VoIP = Voice over Internet Protocol). These attempts implement following concept:

Each IP packet contains voice data of a single associated voice channel (IP= Internet Protocol). An IP packet carries several payload bytes wherein each payload byte is assigned to one audio frame of the associated voice channel. The IP packets are periodically sent from a sender to a receiver. The period is a multiple of the audio frame interval of the voice channel. The sender packs for example 40 bytes in an IP packet, the 40 bytes representing the information of 40 audio frame intervals of the voice channel. The receiver unpacks the 40 bytes and converts this information to a continuous data stream by applying a corresponding delay to each of the bytes.

For example, the ITU-T recommendation H.323 describes terminals and other entities that provide multimedia communication services over packet based networks which may not provide a guaranteed quality of service. These entities provide real-time audio, video and/or data communications and may be used in point to point, multipoint or broadcast configurations. Further, H.323 describes the use of gateways supporting interworking between IP terminals and circuit switched terminals like ISDN terminals. A conversion function provides the necessary conversion of transmission format, control, audio, video and/or data streams between the different terminals.

It is an object of the present invention to improve the transportation of stream traffic over IP networks.

This object is achieved by a gateway for transporting stream traffic over an IP network, wherein the gateway comprising: a first communication unit for receiving stream data assigned to different stream data channels; an allocation unit for allocating two or more stream data channels to a service emulation tunnel provided by IP packets periodically transmitted over the IP network; and a packetization unit for packing the stream data of the allocated two or more stream data channels in IP packets assigned to the stream service emulation tunnel and for periodically sending these IP packets over the IP network, wherein such IP packets contain stream data of two or more different stream data channels. The object is further achieved by a method for transporting stream traffics through a gateway over an IP network, wherein the method comprising the steps of: receiving stream data assigned to different stream data channels; allocating two or more stream data channels to a stream service emulation tunnel provided by IP packets periodically transmitted over the IP network; and packing the stream data of the allocated two or more stream data channels in IP packets assigned to said stream service emulation tunnel and for periodically sending these IP packets over the IP network, wherein such IP packets contain stream data of two or more different stream data channels.

Stream traffic is constituted by data traffic in the form of a continuous data flow between a sender and a receiver. Typical stream traffic is generated by real-time audio or video communications between sender and receiver. For example, one byte of data is exchanged each 125 µs for performing a real-time voice communication.

### Several advantages are achieved by the invention:

Packetization delay and protocol overhead are reduced. A protocol header comprising RTP/UDP/IP needs around 40 bytes per IP packet with IP version 4 (RTP = Real Time Protocol, UDP = User Datagramm Protocol; IP = Internet Protocol). To reduce protocol overhead to 100 %, at least 40 payload bytes have to be transported within each packet which results in 5 ms packetization delay (1 byte per 125 µs frame x 40). According to the invention, each IP packet transports two or more stream data assigned to different stream traffic channels. For example, an IP packet is transmitted each 125 µs and contains 100 bytes of payload, wherein each payload byte is assigned to a different stream traffic channel. Consequently, packetization delay is reduced to 125 µs and per channel overhead is reduced to 0,4 %. A further example may be a transmission period of 1,25 ms and a payload of 100 bytes assigned to ten different stream traffic channels (10 bytes per channel). In this case, packetization delay is reduced to 1,25 ms and protocol overhead per channel is reduced to 4 %.

Consequently, the invention makes it possible to reduce both, transport delay and protocol overhead.

Further, the invention opens possibilities to combine IP routing with stream switching in hierarchical networks or multi-domain IP networks.

The basic principle of the invention, to provide stream service emulation tunnels each transporting stream data of two or more stream data channels, may be combined with or may be implemented in a wide variety of stream traffic IP services and VoIP services to improve quality of service as indicated above. Further, the invention makes it possible to transport traffic of today's circuit switched telephone networks over an IP network in a highly efficient way. Thereby, it supports the combination of IP transport with switched service implementations of today's legacy network nodes.

Further advantages are achieved by the embodiments indicated by the dependent claims.

According to a preferred embodiment of the invention, the gateway provides a bi-directional communication service: The gateway comprises a second communication unit for receiving IP packets assigned to at least one stream service emulation tunnel; and an unpacketization unit for allocating stream data transported by such IP packets to two or more stream data channels. Thereby, it makes it possible that the gateway provides a full range of stream data transport services to a plurality of terminals.

To keep an optimized balance between protocol overhead and packetization delay, one of the following features may be implemented within the gateway:

The packetization unit dynamically changes the transmission period of IP packets assigned to a stream service emulation tunnel. The packetization delay may be reduced by reducing the transmission period. But, an increase of protocol overhead results from such reduction of transmission period. The transmission period may be adapted on the present situation (number of stream data channels allocated to the tunnel, negotiated quality of service parameters, network load, etc.) to find an optimized compromise between minimization of packetization delay and protocol overhead.

Further, the gateway may comprise a tunnel control unit for dynamically establishing and releasing stream service emulation tunnels. Dependent on the number and endpoints of stream data channels, stream service emulation tunnels are established, released or reconfigurated. Further, the allocation scheme, which assigns stream data channels to stream service emulation tunnels, may be rearranged when establishing or releasing stream service emulation tunnels. Both, protocol overhead and packetization delay may be reduced by such dynamic establishment and release of stream service emulation tunnels.

Further, the tunnel control unit may dynamically change the stream allocation scheme. As described above, such changes may be advisable when establishing or releasing stream service emulation tunnels. Further, the characteristics of the system may be adapted to changes of quality of service parameters by rearranging the tunnel allocation scheme.

According to a prefered embodiment of the invention, the first communication unit receives stream data from a circuit switched network, in particular receives E1 frames containing stream data. The invention makes it possible to transport the stream data received from terminals of the circuit switched network over an IP network in a highly efficient way. The gateway may be an integral part of a network node of the circuit switched network. For example, the gateway is an exchange or a concentrator of the circuit switched network. The invention makes it possible to use an IP network as backbone network for legacy network nodes while respecting quality of service demands and bandwidth restrictions.

Further advantages are achieved, if the invention is applied on VoIP gateways, for example on H.323 gateways. Existing services and frameworks may be reused and the quality of service of existing VoIP services is improved.

Further, the invention may also be applied on stream data originating from IP terminals. In that case, the first communication unit is adapted to receive stream data from IP terminals, for example to receive sequences of IP packets each containing stream data of a single stream data channel.

These as well as other features and advantages of the invention will be better appreciated by reading the following detailed description of presently preferred exemplary embodiments taken in conjunction with accompanying drawings of which:
- Fig.1: is a block diagram which shows a communication environment with several communication networks and several gateways.
- Fig. 2: is a functional diagram representing the data flow between gateways of Fig. 1.
- Fig. 3: is a block diagram showing the detailed structure of a gateway according to the invention.

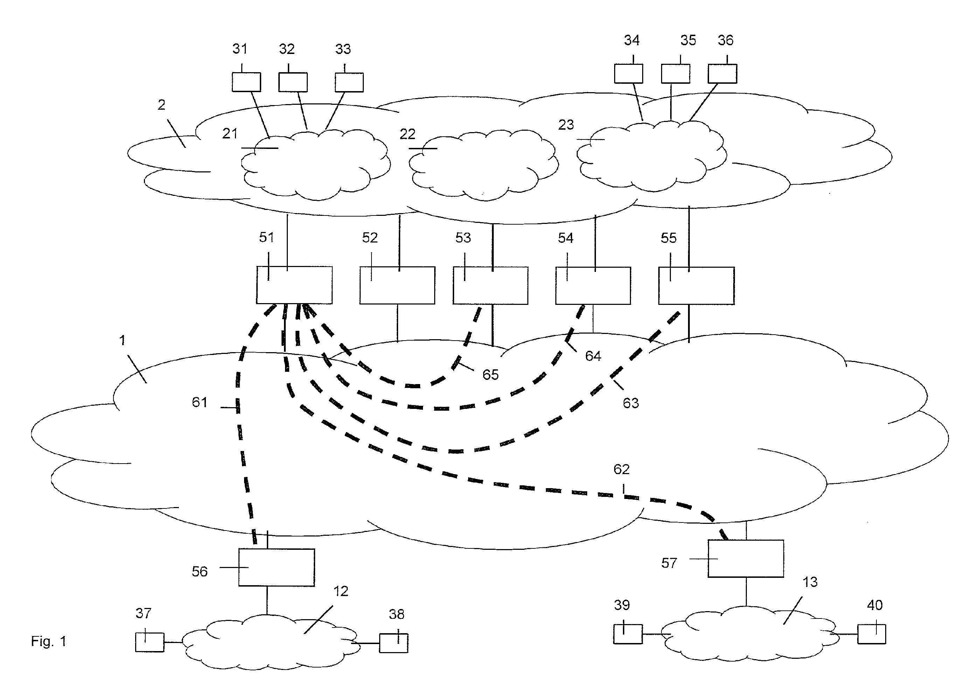

Fig. 1 shows a communication system with several communications networks 1, 2, 12 and 13, several gateways 51 to 57 and several terminals 31 to 40.

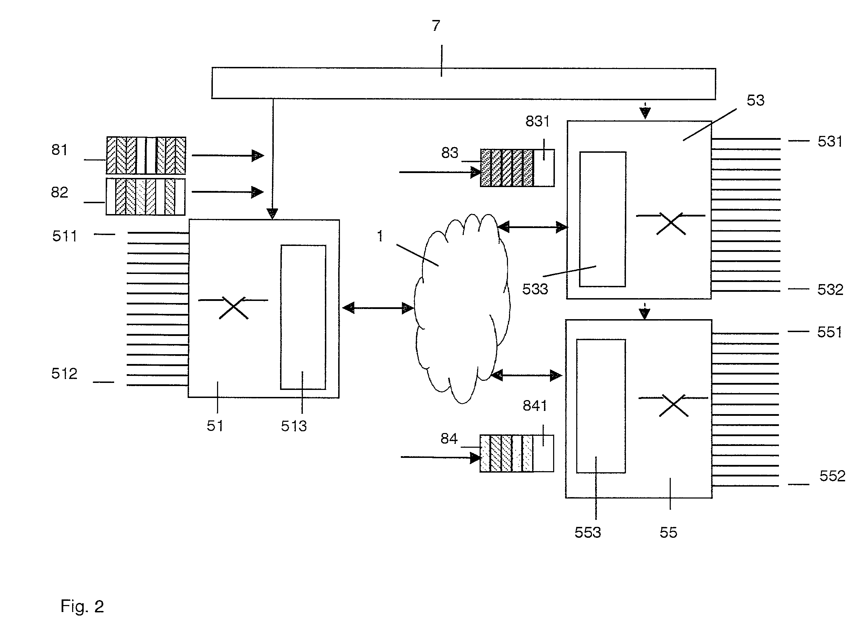

The network 2 is a circuit switched network, for example an ISDN or PSTN network (ISDN = Integrated Services Digital Network; PSTN = Public Switched Telephone Network). The communication network 2 comprises several sub-networks assigned to different network operators. For example, Fig. 2 shows three sub-networks 21, 22 and 23 which are respectively assigned to a different network operator.

The communications network 1 is an IP network (IP = Internet Protocol). Such kind of network uses an IP protocol as layer three communications protocol. For example, the communications network 1 is constituted by a plurality of physical networks which use ATM protocols, SDH protocols or Ethernet protocols as transport protocols. Based on these protocols, the communications network 1 supports communications via the TCP/IP protocol stack (ATM = Asyncronous Transfer Mode, SDH = Synchronous Digital Hierarchy; TCP = Transport Control Protocol). Further, the communication network 1 may support the use of the RTP protocol (RTP = Real Time Protocol) or of MPLS protocols (MPLS = Multi-Protocol Lable-Switching).

The communications networks 12 and 13 are IP-networks which might be formed by the same kind of network as described in conjunction with the communications network 1.

The terminals 31 to 36 are terminals which are capable to communicate via a circuit switched network. For example, the network 31 is a PSTN-telephone, the terminal 32 is an ISDN-telephone and the terminal 33 is a DECT-telephone which communicates via an air interface with one or several base stations connected with the sub-network 21. Further, the terminals 34 to 36 are, for example, mobile telephones which communicate via an air interface with base stations of the sub-network 23. The sub-network 23 is a cellular phone network, for example, a GSM or UMTS network (GSM = Global System for Mobile Communications; UMTS = Universal Mobile Telecommunications System).

The terminals 37 to 40 are IP-terminals. For example, the terminals 37 and 39 are computers connected with the communications network 12 and 13, respectively. These computers are equipped with line cards for communicating with the communications networks 12 and 13 and with functions for operating the protocol stack of the communications networks 12 and 13 and for processing VoIP information. These computers may be connected with the communications networks 12 and 13 via different access technologies, for example, via a LAN, via a digital subscriber line or via a wireless LAN interface (LAN = Local Area Network).

The terminals 38 and 40 are web-phones which are connected with the communications networks 12 and 13 via one of the above described access technologies.

Further, it is also possible that the terminals 31 to 40 are terminals enabling a video communication. Such terminals may be equipped with a video camera and a monitor. Further, it is possible that some of the terminals 31 to 40 are stream servers offering stream data to a plurality of terminals. Offered stream data may be all kind of data which has the characteristic of a continuous data stream. Such stream data are for example data of real-time voice communications, video-communications or video on demand data (e. g. movies) sent from the stream server to a consuming video terminal.

The gateways 51, 53 and 55 are exchanges or concentrators of the sub-networks 21, 22 and 23 that are in addition equipped with the gateway functionality described in the following. The gateways 52 and 54 are VolP gateways (VoIP = Voice over IP), for example according to the H.323 standard, that are in addition equipped with the additional gateway funcionality described in the following.

The gateways 51 and 55 are connected via one or several lines with terminals and/ or exchanges of the sub-network 21. For example, the gateway 51 is formed by a local exchange of the sub-network 21. This local exchange is connected via a plurality of subscriber lines with terminals of the communications network 2. In addition, it is connected via one or several physical connections with the communications network 1. The gateway 55 is a mobile switching center which communicates through several base stations with mobile terminals. Further, it is connected via one or several lines with the communications network 1. Further, it is possible that the gateway 55 constitutes a central gateway server of the sub-network 23 that provides a VoIP service to all terminals connected to the sub-network 23.

The gateways 56 and 57 are, for example, stream data servers of internet service providers, which offer a stream data transport service to subscribers of the respective provider. Further, the gateways 56 and 57 may be central stream data servers of an IP-network of a company or organization. This server transports stream data generated within this IP-network over the Internet.

Several stream service emulation tunnels 61 to 65 are established between the gateways 51 to 57. Each of these stream service emulation tunnels is provided by a sequence of periodically sent IP packets transmitted over the IP network 1.

Further stream service emulation tunnels may be defined between the gateways 51 to 57. Fig. 1 does only show an example of several stream service emulation tunnels defined between the gateway 51 and the gateways 53 to 57. Further stream service emulation tunnels may be defined between the gateway 52 and the gateways 51, 53 to 57, between the gateway 53 and the gateways 51, 52, 54 to 57 etc.

The gateways 51 to 57 receive stream data assigned to different stream data channels from the terminals 31 to 40. For example, the gateway 51 serves three stream data channels transporting stream data from the terminals 31, 32 and 33 to the gateway 51. Normally, each stream data channel is assigned to one endpoint-to-endpoint communication used for the exchange of stream data. The stream data channel may be, for example, a voice channel or a video channel.

Further, it is also possible that a stream data channel represents a point-to-multipoint communication.

The gateways 51 to 57 allocates two ore more stream data channels to a stream service emulation tunnel, which is provided by IP packets periodically transmitted over the IP network 1. For example, the gateway 51 allocates the stream data channels between the gateway 51 and the terminals 31 to 33 to the stream service emulation tunnel 63.

Further, the gateways 51 to 57 pack the stream data of the allocated two or more stream data channels in IP packets assigned to the respective stream service emulation tunnel and periodically send these IP packets over the IP network, wherein such IP packets contain stream data of two or more different stream data channels.

For example, the gateway 51 packs stream data from the terminals 31 to 33 in IP packets assigned to the stream service emulation tunnel 63. Each of the IP packets, which are periodically transmitted from the gateway 51 to the gateway 55 to provide the streams service emulation tunnel 63, comprises stream data of each of the terminals 31 to 33.

In the following the details of the gateways 51 to 57 are exemplary described by hand of the communication between the gateways 51, 53 and 55.

Fig. 2 shows the gateways 51, 53 and 55 and the communication network 1. Further, Fig. 2 shows a control function 7, several frames 81 to 82 and several IP packets 83 and 84.

The gateways 51, 53 and 55 are exchanges of circuit switched communication networks. These exchanges are in addition equipped with gateway functionality for exchanging stream data over an IP network. The exchanges 51 to 53 comprise switching functionalities and packing/unpacking functionalities 513, 533 and 553, respectively. The gateways 51, 53 and 55 serves a plurality of lines used to exchange circuit switched information and one or several lines used to exchange packet switched information.

For example, Fig. 2 shows a plurality of lines 511 to 512 connected with the gateway 51, a plurality of lines 531 to 532 connected with the gateway 53 and a plurality of lines 551 to 552 connected with the gateway 55. Each of the lines 511 to 512, 531 to 532 and 551 to 552 are used to send and/or receive E1 frame contents. For example, Fig. 2 shows a part of an E1 frame 81 received over the line 511 and a part of an E1 frame 82 received over the line 512. The frames 81 and 82 represent circuit switched data streams received by the gateway 51.

Each of the frames 81 and 82 comprises stream data information assigned to eight different stream data channels. The frames 81 and 82 are periodically transmitted over the lines 511 and 512, respectively, wherein the frame interval is 125 µs.

The gateway 51 allocates the stream data channels received over the plurality of lines 511 to 512 to stream service emulation tunnels. For example, the gateway 51 accesses a pool of five stream service emulation tunnels provided by the stream service emulation tunnels 61 to 65. The gateway 51 allocates stream data channels to stream service emulation tunnels of the pool of stream service emulation tunnels according to a predefined tunnel allocation scheme.

The tunnel allocation scheme allocates two or more stream data channels to each of the active stream service emulation tunnels of the pool of stream service emulation tunnels.

For example, it allocates the first, the third and the seventh channel of the frames 81 and the second and the fifth channel of the frame 82 to the stream service emulation tunnel 65. Further, it allocates the second, the sixth and the eighth channel of the frame 81 and the third, the fourth and the seventh channel of the frame 82 to the stream service emulation tunnel 83. The fourth and fifth channel of the frame 81 and the first, sixth and eighth channel of the frame 82 comprise spare bytes and do not transport stream data. Consequently, the gateway 81 does not allocate these channels to any one of the stream service emulation tunnels.

The packing/unpacking function 513 packs the stream data allocated to stream service emulation tunnels to data packets assigned to the respective allocated stream service emulation tunnel. For example, it packs the stream data of the frames 81 and 82 allocated to the stream service emulation tunnel 65 in the IP packet 83 and the stream data of the frames 81 and 82 allocated to the stream service emulation tunnel 63 in the IP packet 84. The IP packet 83 comprises four bytes of stream data, wherein each byte of stream data is assigned to a different stream data channel. Further, the IP packet 83 comprises an IP header 831.

The IP packet 84 comprises five bytes of stream data, wherein each byte of stream data is assigned to a different stream data channel. Further, the IP packet 83 comprises a header 841.

The gateway 51 repeats this allocation procedure each time when a new frame is received over the plurality of lines 511 to 5121. The packing/unpacking function 513 generates each 125 µs for each one of the active stream service emulation tunnel an IP packet comprising stream data of the allocated different stream data channels.

The packing/unpacking functions 533 and 553 of the gateways 53 and 55 unpack the received IP packets 83 and 84, respectively. Further, it allocates each of the unpacked stream data to the corresponding stream data channel. In the following, the gateways 53 and 55 outputs the received stream data as part of circuit switched frames over the plurality of lines 531 to 532 and 551 to 552, respectively.

The control function 7 provides call control and bearer control functionalities. For example, it controls the release and establishment of stream service emulation tunnels and redefines the tunnel allocation schemes available within the gateways 51, 53 and 55. The call control functionalities of the control function 7 may be provided by a central call control server or by two or several interworking call control servers.

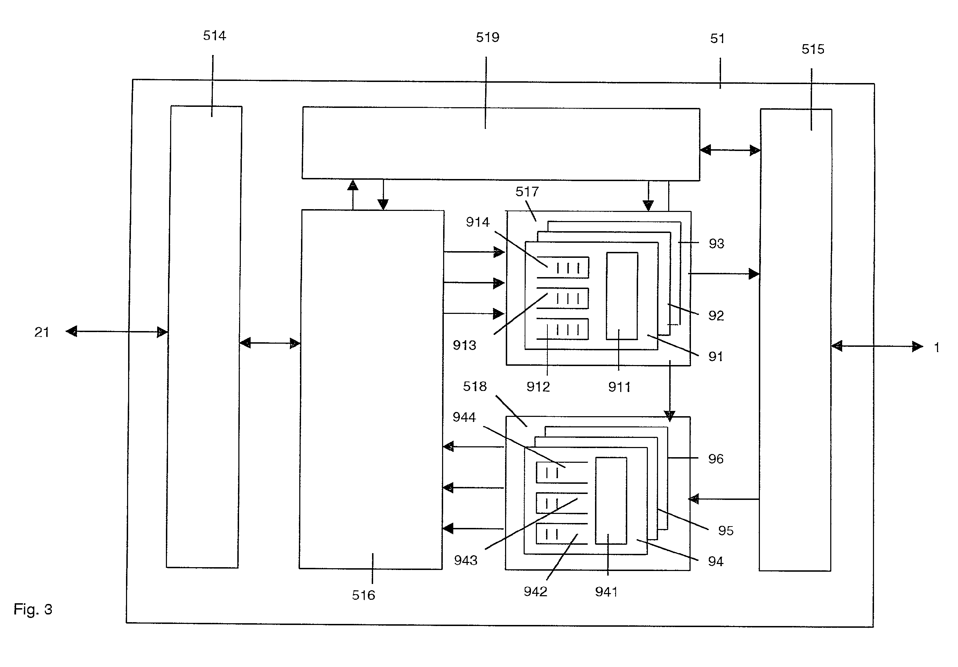

In the following, the details of the gateway 51 are described by hand of Fig. 3.

Fig. 3 shows the gateway 51. The gateway 51 is constituted by a hardware platform and a plurality of software program's executed by the hardware platform. The functionalities of the different units of the gateway 51 are typically performed by the execution of such software programs by the hardware platform of the gateway 51. Consequently, the units represent functional blocks provided by the interworking of hardware and software components of the gateway 51.

The gateway 51 comprises two communication units 514 and 515, an allocation unit 516, a packetization unit 517, an unpacketization unit 518 and a tunnel control unit 519.

The communication unit 514 handles the communication with the circuit switched sub-network 21. It receives stream data assigned to different stream data channels. For example, it receives data from several E1 connections.

The communication unit 515 handles the communication with the IP network 1. It comprises the necessary functionalities to process the TCP/IP protocol stack used for these communications.

The allocation unit 516 allocates two or more stream data channels to a stream service emulation tunnel provided by IP packets periodically transmitted over the IP network 1.

The allocation unit 516 accesses a stream channel allocation scheme which assigns stream channels to stream service emulation tunnels. For example, it accesses a matrix like data structure which maps identifications of stream data channels to identifications of stream service emulation tunnels.

The allocation unit 516 performs this allocation in both directions. It allocates stream data received by the communication unit 514 to stream service emulation tunnels. Further, it allocates stream data, which is received by the communication unit 515 and assigned to stream service emulation tunnels, to stream data channels served by the communication unit 514.

Further, the allocation unit 516 recognizes the number and the identifications of the stream data channels handled by the communication unit 514. It reports to the tunnel control unit 519 any change of these stream data channels. For example, it reports the establishment of new stream data channels or the release of old stream data channels. Further, it receives control information from the tunnel control unit 519 which requests changes of the stream tunnel allocation scheme followed by the allocation unit 516.

The packetization unit 517 packs stream data of stream data channels in IP packets periodically transmitted over the IP network 1. It comprises several sub-units, each sub-unit serves one stream service emulation tunnel.

For example, Fig. 3 shows three sub-units 91, 92 and 93 which serve the stream service emulation tunnels 61, 63 and 65, respectively.

Further, it receives control information from the tunnel control unit 519. This control information indicates the establishment of a new stream service emulation tunnel and induces the packetization unit 517 to create a new sub-unit, which serves the newly established stream service emulation tunnel. Further, theses control information may indicate the release of a stream service emulation tunnel and induce the packetization unit 517 to delete the processing of the corespondent sub-unit.

The functionality of the sub-units 91 to 93 are in the following described by hand of the functionality of the sub-unit 91.

The sub-unit 91 comprises several buffers, wherein each buffer is assigned to one of the stream data channels allocated to the stream service emulation tunnel. Fig. 3 shows three such buffers 914, 913 and 912. Further, the sub-unit 91 comprises a control unit 911 which serves the buffers 914, 913 and 912. It packs one or several stream data of each of these buffers in an IP packet and transmits this IP packet to the communication unit 515, which sends the IP packet over the IP network 1. The control unit 914 performs this packing procedure on a periodic basis, for example each 125 ms or each multiple of 125 µs. Control commands received from the tunnel control unit 519 set up the number of stream data of each buffer packed in the IP packet and set up the transmission period.

The unpacketization unit 518 allocates stream data to two or more stream data channels. As already described above in conjunction with the packetization unit 517, the unpacketization unit 518 comprises several sub-units each assigned to a different stream service emulation tunnel. The creation and deletion of such sub-units is controlled by the tunnel control unit 519. Fig. 3 shows three such sub-units 94, 95 and 96.

The sub-unit 94 comprises a buffer for each stream data channel allocated to the stream service emulation tunnel served by the sub-unit 94. Fig. 3 shows three such buffers 942, 943 and 944. Further, the sub-unit 94 comprises a control unit 941. The control unit 941 performs the allocation of received stream data to the buffers 942, 943 and 944 by help of the allocation unit 516.

The tunnel control unit 519 controls the release and establishment of stream service emulation tunnels. It detects whether a new stream data channel can be served by an already established stream service emulation tunnel, it monitors the load of the different stream service emulation tunnels and establishes or releases stream service emulation tunnels based on this information. Further, it can take this decision based on additional information like the load of the IP network 1, tariff information etc.

The establishment and release of stream service emulation tunnels is done by help of control information exchanged with the tunnel control units of the other gateways 52 to 57 or as specified by bearer control signaling (see embodiment according to Fig. 2).

Further, the tunnel control unit 519 dynamically changes the stream channel allocation scheme used for the allocation of stream data channels to stream service emulation tunnels. These changes reflect establishment and/or release of stream service emulation tunnels and may depend on the same kind of information as taken in consideration for the establishment and/or release of stream service emulation tunnels.

Further, the tunnel control unit controls the dynamic change of the transmission period of IP packets assigned to a stream service emulation tunnel. It detects the number of stream data channels assigned to the respective stream service emulation tunnel. Dependent on the number of such channels and preset quality of service constraints, it varies the transmission period and/or the number of stream data packed per stream data channel in the periodically sent I P packets.

For example, the sub-unit 92 serves a stream service emulation tunnel which handles 100 stream data channels. The sub-unit 92 may send each 125 µs an IP packet containing one byte of stream data for each of the 100 stream data channels. Consequently, the IP packet transports a payload of 100 byte. But, it is also possible that it sends each 1,25 ms an IP packet that contains ten stream data bytes of each allocated stream data channel which results in a payload of 1000 bytes. The packetization delay of the first case is 125 µs and the protocol overhead per channel of the first byte is about 0,4 %. In contrast to this, the packetization dealy of the second example is 1,25 ms and the protocol overhead per channel is again 0,4 % despite the lower number of stream channels transported over the stream service emulation channel.

Dependent on preset conditions, the tunnel control unit 519 may hold the packetization delay or the protocol overhead in predefined ranges.

## Claims

1. A gateway (51 to 57) for transporting stream traffic over an IP network (1),
**characterized in**
**that** the gateway (51 to 57) comprising: a first communication unit (514) for receiving stream data (81, 82) assigned to different stream data channels; an allocation unit (516) for allocating two or more stream data channels to a stream service emulation tunnel (61 to 65) provided by IP packets (83, 84) periodically transmitted over the IP network (1); and a packetization unit (517) for packing the stream data (81, 82) of the allocated two or more stream data channels in IP packets (83, 84) assigned to the stream service emulation tunnel (61 to 65) and for periodically sending these IP packets (83, 84) over the IP network (1), wherein such IP packets (83, 84) contain stream data (81, 82) of two or more different stream data channels.

2. A gateway according to claim 1,
**characterized in**
**that** the gateway (51 to 57) further comprising: a second communication unit (515) for receiving IP packets associated to at least one stream service emulation tunnel (61 to 65); and a unpacketization unit (518) for allocating stream data transported by such IP packets to two or more stream data channels.

3. The gateway according to claim 1,
**characterized in**
**that** the packetization unit (517) is arranged to change the transmission period of IP packets (83, 84) assigned to a stream service emulation tunnel (51 to 57) dynamically.

4. The gateway according to claim 1,
**characterized in**
**that** the gateway (51 to 57) further comprising a tunnel control unit (519) for dynamically establishing and releasing of stream service emulation tunnels (61 to 65).

5. The gateway according to claim 1,
**characterized in**
**that** the gateway (51 to 57) further comprising a tunnel control unit (519) for dynamically changing the stream channel allocation scheme used for the allocation of stream data channels to stream service emulation tunnels.

6. The gateway according to claim 1,
**characterized in**
**that** the first communication unit (514) is adapted to receive stream data (81, 82) from a circuit switched network (2, 21, 22, 23), in particular is adapted to receive E1 frames (81, 82) containing stream data.

7. The gateway according to claim 6,
**characterized in**
**that** the gateway is a VOIP Gateway (52, 54).

8. The gateway according to claim 6,
**characterized in**
**that** the gateway (51, 53, 55) is an exchange of a circuit switched network (2, 21, 22, 23).

9. The gateway according to claim 1,
**characterized in**
**that** the first communication unit (514) is adapted to receive stream data over IP terminals (37 to 40).

10. A method for transporting stream traffic through a gateway (51 to 57) over an IP network (1),
**characterized in**
**that** the method comprising the steps of:
receiving stream data (83, 84) assigned to different stream data channels;
allocating two or more stream data channels to a stream service emulation tunnel (61 to 65) provided by IP packets (83, 84) periodically transmitted over the IP network (1); and
packing the stream data of the allocated two or more stream data channels in IP packets (83, 84) assigned to said stream service emulation tunnel (61 to 65) and for periodically sending these IP packets (83, 84) over the IP network (1), wherein such IP packets (83, 84) contain stream data of two or more different stream data channels.
